# EUROPEAN PATENT APPLICATION

(11) **EP 3 581 438 A1**
(43) Date of publication of application: **18.12.2019**
(21) Application number: 19020385.1
(22) Date of filing: 14.06.2019
(51) Int. Cl.: B60R 15/04

(54) **TOILET FOR THE CABIN OF A TRUCK**

(30) Priority: 14.06.2018 ES 201830904 U
(71) Applicant: Diaz Quintana, José, 33161 Asturias (ES)
(72) Inventor: Diaz Quintana, José, 33161 Asturias (ES)
(74) Representative: De Castro Hermida, José Luis

(57) **Abstract**

The invention relates to a toilet for the cabin of a truck which is composed by a tank, a toilet bowl and an extraction reservoir, all joined by means of pipes, in such a way that the toilet bowl is located under the bed of the truck and both the tank and the reservoir are located externally in the back of the cabin. This way, the location of this toilet does not imply a reduction of the space in the cabin of the vehicle or in the volume of the box containing the load thereof.

## Description

### OBJET OF THE INVENTION

The invention is designed so that a truck driver can do his basic needs in a toilet included in the cabin of a truck, with the location of this toilet not implying a reduction of the space in the own cabin of the vehicle or in the volume of the box containing the load thereof, reason why with the toilet of the invention the total length of the truck is invariable and offers a truck driver the possibility of doing his basic physiological needs without having to leave the cabin of the truck.

The toilet for the cabin of a truck object of the invention, is composed by a tank, a toilet bowl and an extraction reservoir, all joined by means of pipes; in such a way that the toilet bowl is located under the bed of the truck, and both the tank and the extraction reservoir are located externally on the back of the cabin.

The field of application of the invention is comprised within the sanitary sector, specifically in toilets included in cabins of trucks with trailers, semi-trailers or the like.

### BACKGROUND OF THE INVENCTION

At present one of the main disadvantages suffered by truck drivers along the transport of goods, is the discomfort that is to make their basic needs in their work schedules. That is why truck drivers are forced to go to public toilets located in rest areas, service stations or the like that are not always open at specific times. So, drivers or truck drivers are often forced to relieve themselves in the field, meadow or the like.

From the state of the art different registries related to sanitary apparatuses located in trucks are disclosed, as for example the one disclosed in the registry US20170361786A1 where a system and a method for the formation of a structure with panels and a toilet are presented, located both in a side of the truck loading platform. This structure allows a user to make use of the toilet with total privacy, provided that this structure remains deployed on one side of the truck. Among the multiple differences found between this registry and the toilet of the present invention, we highlight that the toilet of the invention is located fixedly in the cabin of the truck, totally integrated in it and arranged in such a way that at no time the different elements that compose it protrude by the sides of the truck. However, in the toilet of the previously mentioned registry, it must be mounted on one side of the loading area of the truck, in such a way that all the elements that compose its structure protrude laterally from the loading frame thereof, its positioning being unfeasible inside the cabin of the truck. For all these reasons, we consider that with the toilet for truck cabins that is the object of the invention, it contributes structural and technical improvements and differences in a way that is different from what was presented in the registry, previously mentioned.

From the state of the art we also highlight the registry of the patent US006079770A, considering it as the registry closest to the present invention. In the alluded registry, a waste system for trucks located inside the cabin of a truck is disclosed, which is composed by a chemical toilet that is located in a closet. This toilet can only be used when it is extracted from the aforementioned closet by means of a support on which the entire toilet is slid along with its reservoirs. The drawback of this registry is that, for installing it, it is necessary to modify the dimensions of the truck cabin, that is, both the dimensions of the closet containing the chemical toilet and its corresponding reservoir need to occupy a large volume of the truck cabin. It is for this reason that this system is common in American truck cabins since in America the legislation referring to the transport in vehicles of great tonnage, does not limit nor regulates the maximum lengths of the trucks; while in countries like Spain, these maximum lengths are regulated and stipulated. It is for this reason that the toilet for truck cabins of the present invention shows both structural differences and technical improvements with respect to the indicated registry, since it is possible to include a toilet bowl inside a cabin without the need of increasing the dimensions of the cabin or reducing the size of the transport trailer or the like, since all the elements that compose the toilet of the invention are totally integrated in the structure of a cabin, with the virtue of not having to modify the dimensions thereof.

Therefore, in accordance with the aforementioned, with the toilet for the cabin of the truck of the present invention, one goes further in the sector of the toilets included in the cabins of trucks with trailers, semi-trailers or the like, since the present invention provides differences and advantages over toilets or bathrooms for conventional trucks, by means of the integration of its various elements to the structure of a cabin that gives a user the possibility of having a toilet, without the need to increase the dimensions in the structure of the cabin or the reduction of the load of the truck; and all this in an improved and different way from what is known in this sector up to now.

Next, a detailed description of the invention that completes these general ideas introduced in this point is made.

### DESCRIPTION OF THE INVENTION

The toilet for the cabin of a truck object of the invention, is composed by a tank, a toilet bowl and an extraction reservoir, all joined by means of pipes; in such a way that the toilet bowl is located under the bed of the truck and both the tank and the reservoir are located externally in the back of the cabin.

The toilet of the invention is fully integrated into the dimensions of the structure of the truck cabin, that is why when the toilet bowl is not being used it remains hidden inside the cabin by the very elements that compose the aforementioned cabin, specifically the toilet bowl is covered by the bed of the truck. It is convenient to specify that trucks that transport merchandise over long distances, have between the backs of their seats and the back of the cabin a foldable storage bed on which a mattress or mat is located, this assembly being the driver's bed.

This toilet bowl is located inside the storage bed, on the floor of the cabin and positioned behind the back of the passenger seat. That is why when this bed is horizontal, the toilet bowl is completely hidden under the bed of the truck. On the contrary, when a user makes use of the toilet, he accesses the toilet bowl when the bed is folded down or vertically deployed, through its corresponding hinges or the like. In this way, the toilet bowl is fully accessible. Another detail of the invention is that the toilet bowl integrated in the cabin of the truck has a seat and a lid, which ensures comfort and hygiene to a user.

The aforementioned toilet bowl is joined by a cleaning pipe to a tank and by a waste pipe to a reservoir. Emphasizing that both the tank and the reservoir are externally secured on the back of the cabin structure, without having to structurally increase the dimensions thereof. Said tank is anchored on the rear exterior part of the cabin structure, specifically at an upper point; while the reservoir is anchored on the rear exterior part of the cabin structure at a lower point. Highlighting that the tank has a filling hole in its body and the reservoir has a discharge hole; and both holes are configured for placing a plug, thus securing its contents.

Thus, when a liquid such as water is introduced into the tank, this water falls by gravity through the cleaning pipe to the toilet bowl, thus dragging the possible remains deposited inside the cavity of the mentioned bowl; in such a way that, these possible remains along with the water are transported by the waste pipe to the discharge reservoir. All this is possible since the different elements that compose the whole of the toilet are located at different heights and by the action of gravity the residues or organic remains contained in the toilet bowl of the invention are transported to the aforementioned reservoir.

It is noted that for the removal of waste or the biological deposits contained in the extraction reservoir to decompose or disintegrate as quickly as possible, in the tank of the invention the liquid introduced in addition to water can also be a mixture of water with chemical fluid, through which odours are eliminated and which prevents the formation of gases inside the reservoir. Therefore, when the extraction reservoir is full of remains, these are evacuated through the extraction hole and are deposited in authorized wastewater control areas or the like.

For all this, it is important to note that through the toilet for the cabin of a truck of the invention, a user can do their basic needs without the obligation to have a public toilet nearby and especially, without this implying an extension of the cabin structure or the reduction of the volume of the load of the truck.

To complete the description that is being made and in order to help to a better understanding of the characteristics of the invention, an assembly of drawings is included as an integral part thereof, in which the following has been represented with an illustrative and non-limiting character:
Figure 1 is a representation of the profile of the cabin of a truck with the toilet of the invention secured in the cabin of the truck.
Figure 2 is a plan representation of the cabin of the truck with the toilet of the invention secured according to Figure 1, in which the interior of the cabin with the bed in horizontal position can be seen.
Figure 3 is a plan representation of the cabin of the truck with the toilet of the invention secured, in which the interior of the cabin with the bed in a folded down position can be seen, according to Figure 2.

### DESCRIPTION OF THE DRAWINGS

The toilet for the cabin of a truck object of the invention, is composed by a tank (2), a toilet bowl (1) and a reservoir (3), all joined by means of some pipes, so that the tank (2) it is connected to the toilet bowl (1) by means of a cleaning pipe (21) and the toilet bowl (1) is connected to the reservoir (3) by a waste pipe (31).

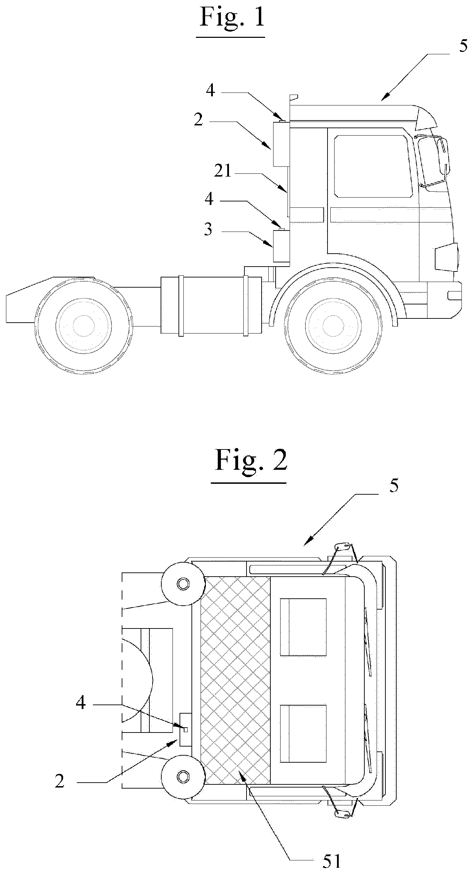

As shown in Figure 1, both the tank (2) and the reservoir (3) are located externally on the back of the cabin (5), specifically the tank (2) is located at an upper point of the cabin (5); while the reservoir (3) is located at a lower point of the cabin (5). Thus, when the tank (2) is filled with liquid, such as for example water, this water falls by gravity through the cleaning pipe (21) which in turn is connected to the toilet bowl (1), located inside the cabin (5) of the truck, in such a way that the remains deposited inside the toilet bowl (1) are dragged by the waste pipe (4) to the reservoir (3) to which it is connected.

Another detail that can be seen in the aforementioned figure is that the tank (2) has a filling hole in its body and the reservoir has a discharge hole; and both holes are configured for placing a plug (4) with which its contents are secured.

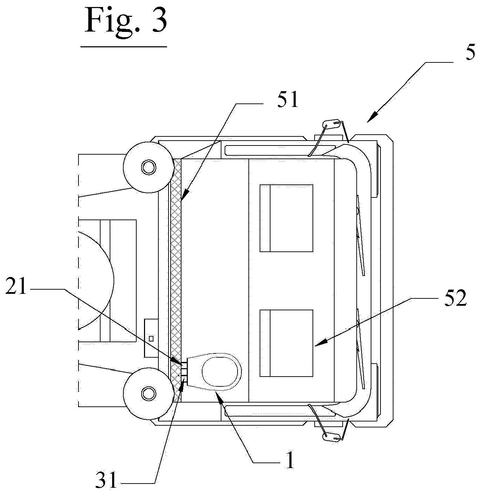

As shown in Figure 2 and Figure 3, the toilet bowl (1) is fully integrated into the cabin (5) of the truck, so that when the toilet bowl (1) is not being used it is completely hidden between the elements that compose the cabin (5) of the truck, specifically the toilet bowl (1) is covered by the bed (51) of the truck. Therefore, this bed (51), which is composed by a foldable storage bed and a mattress, totally conceals the toilet bowl (1) of the invention. That is why when the bed (51) of the cabin (5) is horizontal, as shown in Figure 2, the toilet bowl (1) is completely hidden under the bed (5) of the truck; while, as shown in Figure 3, when this bed (51) is folded vertically or folded down, the toilet bowl (1) is fully accessible to a user. It is highlighted that the toilet bowl (1) is located on the floor of the cabin (5) behind the passenger seat (52).

Another detail of the invention is that the toilet bowl (1) incorporates a seat and a lid on its surface (not shown). In addition to specifying that the liquid introduced into the tank (2), in addition to water, can also contain a mixture of water with chemical fluid that eliminate odours and prevents the formation of gases inside the extraction reservoir (3).

## Claims

1. TOILET FOR THE CABIN OF A TRUCK wherein the cabin (5) is of the type that has inside a bed (51) with foldable storage bed, which is **CHARACTERIZED in that** it comprises:
- a tank with a filling hole, which is located externally on the rear and upper part of the structure of the cabin (5) of a truck, and which is connected to a cleaning pipe (21), which joins it to a toilet bowl (1);
- a toilet bowl (1), located on the floor of the cabin (5) under the bed (5) of the truck, and which is connected by the cleaning pipe (21) to the tank (2) and by a waste pipe (31) to a reservoir (3); and
- a reservoir (3) with an extraction hole, which is located externally on the rear and lower part of the structure of the cabin (5), and which is connected to the toilet bowl (1) by means of a waste pipe (31).

2. TOILET FOR THE CABIN OF A TRUCK, according to claim 1, which is **CHARACTERIZED in that** the toilet bowl (1) is positioned behind the passenger seat (52) of the vehicle.

3. TOILET FOR THE CABIN OF A TRUCK, according to claims 1 and 2, which is **CHARACTERIZED in that** the toilet bowl (1) has on its surface a lid and a seat.

4. TOILET FOR THE CABIN OF A TRUCK, according to claim 1, which is **CHARACTERIZED in that** the tank (2) and the reservoir (3) each has a plug (4).

5. TOILET FOR THE CABIN OF A TRUCK, according to claims 1 and 4, which is **CHARACTERIZED in that** the liquid contained within the tank is a mixture of water with chemical fluid.
